# EUROPEAN PATENT APPLICATION

(11) **EP 3 422 565 A1**
(43) Date of publication of application: **02.01.2019**
(21) Application number: 18181008.6
(22) Date of filing: 29.06.2018
(51) Int. Cl.: H02S 10/40

(54) **SOLAR SUPPORT MOUNTED ON A VEHICLE ROOF**

(30) Priority: 30.06.2017 CN 201720783911 U
(71) Applicant: Beijing Hanergy Solar Power Investment Co., Ltd., 101499 Beijing (CN)
(72) Inventor: LU, Penghui, Beijing, 101499 (CN); ZHANG, Dapeng, Beijing, 101499 (CN); WANG, Jian, Beijing, 101499 (CN)
(74) Representative: Casalonga

(57) **Abstract**

A solar support (10) mounted on a vehicle roof includes a module bracket (2) and a photovoltaic module (1) disposed on the module bracket (2). The module bracket (2) fits the vehicle roof. The module bracket (2) is provided with at least two fixing units (13). Each of the at least two fixing units (13) detachably fits an upper edge of a vehicle door frame.

## Description

### TECHNICAL FIELD

This application relates to the field of new energy vehicle, and in particular to a solar support mounted on a vehicle roof.

### BACKGROUND

A solar vehicle means a vehicle with a solar module mounted thereon, so that the solar module provides power supplement for an energy storage system of the vehicle in lighting conditions.

### SUMMARY

Some embodiments of the present disclosure provide a solar support mounted on a vehicle roof, comprising a module bracket and a photovoltaic module disposed on the module bracket. The module bracket fits the vehicle roof. The module bracket is provided with at least two fixing units. Each of the at least two fixing units detachably fits an upper edge of a vehicle door frame.

In some embodiments, the module bracket is in a plate-shape, the module bracket is provided with a recess, the photovoltaic module is laid in the recess, and the area of a bottom surface of the recess is equal to the area of the photovoltaic module.

In some embodiments, the module bracket is in a plate-shape, the module bracket is provided with a recess, the photovoltaic module is laid in the recess, and there is a gap between a sidewall of the recess and the photovoltaic module.

In some embodiments, between the photovoltaic module and the sidewall of the recess, a pressing piece surrounding the photovoltaic module is disposed. The pressing piece has a T-shaped cross-section. A vertical portion of the pressing piece is disposed between the photovoltaic module and the sidewall of the recess. A part of a surface, close to a bottom surface of the recess, of a parallel portion of the pressing piece is in contact with the photovoltaic module. Another part of the surface, close to the bottom surface of the recess, of the parallel portion of the pressing piece is in contact with the module bracket.

In some embodiments, the gap between the sidewall of the recess and the photovoltaic module is filled with the vertical portion of the pressing piece after the vertical portion of the pressing piece being pre-pressed.

In some embodiments, one of the at least two fixing units is a fixing hook.

In some embodiments, an inner side of the fixing hook fits the upper edge of the vehicle door frame, and an outer side of the fixing hook fits an upper edge of an inner side of a vehicle door corresponding to the vehicle door frame.

In some embodiments, the fixing hook and the module bracket are connected via a retractable unit therebetween.

In some embodiments, the retractable unit comprises a pulling belt and a reel. The reel is rotatably connected with the module bracket. One end of the pulling belt is fixedly connected with the reel, and another end of the pulling belt is connected with the fixing hook. The solar support further comprises a locking mechanism, and the reel cooperates with the locking mechanism.

In some embodiments, the retractable unit comprises an elastic connector. An end of the elastic connector is connected with the module bracket, and another end of the elastic connector is connected with the fixing hook.

In some embodiments, the retractable unit comprises a retractable hole disposed on the module bracket and a retractable bar fitting the retractable hole. A plurality of protrusions are arranged on the retractable bar. The solar support further comprises a jacking mechanism, disposed on a sidewall of the retractable hole and configured to press the retractable bar against the sidewall of the retractable hole.

In some embodiments, one of the at least two fixing units further comprises a fixing supporting bar. Each of two ends of the fixing supporting bar is connected with the fixing hook. The module bracket is detachably connected with the fixing supporting bar.

In some embodiments, the module bracket and the fixing supporting bar are connected via a clamping mechanism. The clamping mechanism comprises an upper clamping block and a lower clamping block. The upper clamping block is mounted on the module bracket. The lower clamping block is mounted on the upper clamping block. A groove fitting the fixing supporting bar is provided on the upper clamping block and/or the lower clamping block. The fixing supporting bar is located in the groove.

In some embodiments, the module bracket and the fixing supporting bar are connected via a dovetail groove and a dovetail tenon. The dovetail groove is provided on the module bracket, and the dovetail tenon fitting the dovetail groove is provided on the fixing supporting bar. Or, the dovetail tenon is provided on the module bracket, and the dovetail groove fitting the dovetail tenon is provided on the fixing supporting bar.

In some embodiments, one of the at least two the fixing units and the module bracket are connected via a sliding mechanism therebetween. The one of the at least two fixing units is able to slide in a front-rear direction of the module bracket. The sliding mechanism comprises a slide rail and a slider matching the slide rail.

In some embodiments, the solar support further comprises a positioning mechanism. The positioning mechanism is disposed between the fixing unit and the module bracket, the positioning mechanism comprises positioning pin holes arranged on the slide rail, and positioning pin holes arranged on the slider. The positioning mechanism further comprises a positioning pin fitting the positioning pin holes.

In some embodiments, the solar support further comprises a positioning mechanism. The positioning mechanism is disposed between the fixing unit and the module bracket. The positioning mechanism comprises two clamping blocks configured to clamp the slide rail and a pressing mechanism configured to press the two clamping blocks. At least one of the two clamping blocks is hinged with the slider.

In some embodiments, a plurality of supporting pads are arranged on a side of the module bracket, which is away from the photovoltaic module. A material constituting the supporting pads is an elastic material.

### BRIEF DESCRIPTION OF THE DRAWINGS

FIG. 1 is a structural diagram of a solar support mounted on a vehicle roof provided by some embodiments of the present disclosure;
FIG. 2 is a cross-sectional view taken along line O-O in FIG. 1;
FIG. 3 is a structural diagram of another solar support mounted on a vehicle roof according to some embodiments of the present disclosure;
FIG. 4 is a cross-sectional view taken along line O-O in FIG. 3;
FIG. 5 is a diagram of a module bracket fitting a vehicle roof provided by some embodiments of the present disclosure;
FIG. 6 is another diagram of a module bracket fitting a vehicle roof provided by some embodiments of the present disclosure;
FIG. 7 is a structural diagram of another solar support mounted on a vehicle roof provided by some embodiments of the present disclosure;
FIG. 8 is an exploded diagram of the structure shown in FIG. 7;
FIG. 9 is a structural diagram of a connection of a module bracket and a fixing supporting bar provided by some embodiments of the present disclosure;
FIG. 10 is a structural diagram of another connection of a module bracket and a fixing supporting bar provided by some embodiments of the present disclosure;
FIG. 11 is a structural diagram of another connection of a module bracket and a fixing supporting bar provided by some embodiments of the present disclosure;
FIG. 12 is a cross-sectional view taken along line A-A in FIG. 7;
FIG. 13 is a diagram of a vehicle with a solar support mounted thereon provided by some embodiments of the present disclosure;
FIG. 14 is a cross-sectional view taken along line B-B in FIG. 7;
FIG. 15 is a structural diagram of a connection between a module bracket and a fixing hook provided by some embodiments of the present disclosure;
FIG. 16 is a structural diagram of another connection of a module bracket and a fixing hook provided by some embodiments of the present disclosure;
FIG. 17 is a structural diagram of another connection of a module bracket and a fixing hook provided by some embodiments of the present disclosure;
FIG. 18 is a structural diagram of a connection of a module bracket and a fixing unit provided by some embodiments of the present disclosure; and
FIG. 19 is a structural diagram of another connection of a module bracket and a fixing unit provided by some embodiments of the present disclosure.

### DETAILED DESCRIPTION

The following further describes some embodiments of the present disclosure with reference to the accompanying drawings.

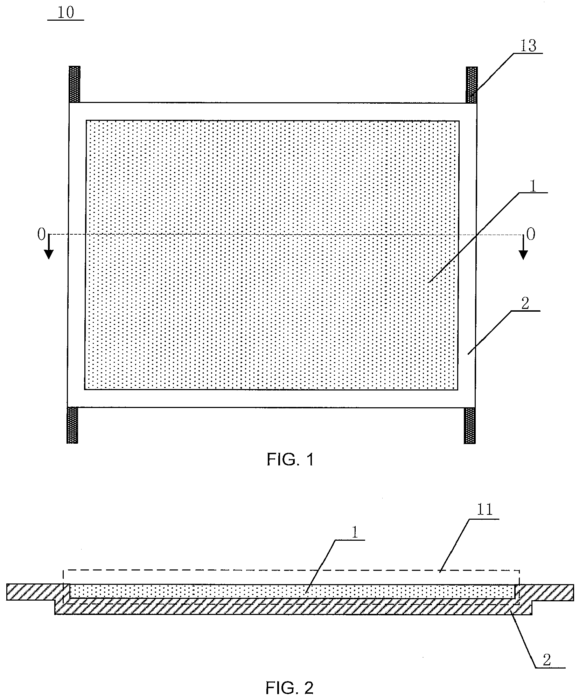

Some embodiments of the present disclosure provide a solar support 10 mounted on a vehicle roof, as shown in FIG. 1, comprising a photovoltaic module 1. The photovoltaic module 1 is capable of converting solar energy into electrical energy. In addition, the photovoltaic module 1 described above is able to be a solar cell panel or a solar cell film, which is not limited in this disclosure.

With the development of related technologies in solar power generation, thin film power generation technology has become an important part of the technologies in solar power generation, and is widely used in transportation, mobile energy, construction and other fields. In the thin film power generation technology, the photovoltaic module 1 described above is able to be thinned to form a solar cell film. The solar cell film has advantages of being light, thin, and soft, and hence has incomparable advantages than a crystal silicon solar cell in the application in the field of new energy vehicle.

However, as a vehicle roof is generally a double curved surface, the solar cell film is not suitable for being directly attached to a vehicle roof which is a double curved surface in order to avoid damage to the solar cell film due to two-way stress. Furthermore, due to the different shapes of vehicles, the versatility of directly attaching a solar cell film on a vehicle roof is lower.

Some embodiments of the present application also provide the following ways of mounting the photovoltaic module 1 onto a vehicle roof:
Exemplarily, it is able to, by laminating the photovoltaic module 1 with the vehicle roof, make a one-piece roof.

Or, exemplarily, it is able to adopt a method of fixedly mounting a supporting frame on the vehicle roof and then mounting the photovoltaic module 1 on the supporting frame.

However, if the above one-piece roof or the method of fixedly mounting the above supporting frame on the vehicle roof is adopted, it always needs to assemble the photovoltaic module 1 and the vehicle roof together before the new energy vehicle leaves the factory. Thus, a user is not able to mount and disassemble the photovoltaic module 1 himself, which is not able to meet the needs of some consumers.

Regarding the above problems, some other embodiments of the present disclosure provide a solar support 10 mounted on a vehicle roof. As shown in FIG. 1, the solar support 10 further comprises a module bracket 2 on which the photovoltaic module 1 described above is disposed.

In order to dispose the photovoltaic module 1 on the module bracket 2, exemplarily, as shown in FIG. 2, the module bracket 2 is in a plate shape. A recess 11 is provided on the module bracket 2. The photovoltaic module 1 described above is laid in the recess 11.

It should be noted that the module bracket 2 is able to be in a flat plate shape or a arced plate structure. The recess 11 on the module bracket 2 is able to be formed via a milling process by removing a part of the material of the module bracket 2, or formed via a stamping process, which is not limited herein.

In addition, as shown in picture 2, in some embodiments, the area of the bottom surface of the recess 11 is equal to the area of the photovoltaic module 1. In this situation, an edge of the photovoltaic module 1 is in contact with a sidewall of the recess 11.

It should be noted that, in some embodiments, the photovoltaic module 1 is provided with a glue layer on a surface close to the bottom surface of the recess 11 (i.e., the lower surface of the photovoltaic module 1), in order to adhere the photovoltaic module 1 into the recess 11. In this way, edges of a glue film between the photovoltaic module 1 and the bottom surface of the recess 11 are hidden in the recess 11, which can slow aging of the glue film to a certain extent and extend the service life thereof. Or, in some embodiments, it is also possible to provide no glue layer on the lower surface of the photovoltaic module 1, the photovoltaic module 1 is mounted into the recess 11 of the foregoing module bracket 2 by an interference fit.

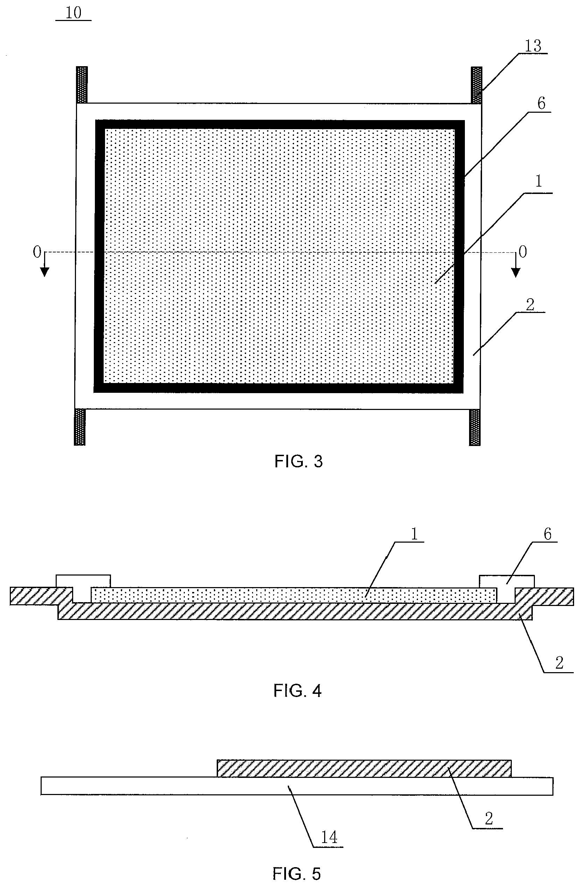

Or, as shown in FIG. 4, in some embodiments, the sidewall of the recess 11 is spaced from one edge of the photovoltaic module 1, that is, there is a gap between the sidewall of the recess 11 and the photovoltaic module 1. Thus, the above gap is able to provide a certain volume expansion space reserved for expansion of the photovoltaic module 1 on heating.

Or, in the situation that there is a certain gap between the photovoltaic module 1 and the sidewall of the recess 11, as shown in FIG. 3, in some embodiments, a pressing piece 6 surrounding the photovoltaic module 1 is disposed in this gap.

The pressing piece 6 has a T-shaped cross-section, as shown in FIG. 4. The vertical portion of the pressing piece 6 (i.e., the portion of the pressing piece 6 perpendicular to the bottom surface of the recess 11) is disposed between the photovoltaic module 1 and the sidewall of the recess 11.

In addition, the parallel portion of the pressing piece 6 (i.e., the portion of the pressing piece 6 parallel to the bottom surface of the recess 11) comes into contact with the photovoltaic module 1 at a part of the surface close to the bottom surface of the recess 11, and another part of this surface close to the bottom surface of the recess 11 is in contact with the module bracket 2.

The foregoing pressing piece 6 is made of rubber, silicone or other elastic materials. In some embodiments, the vertical portion of the pressing piece 6 is pre-pressed and then mounted in the foregoing gap. In this way, after being mounted into the foregoing gap and free from the pre-loading force, the pressing piece 6 undergoes elastic deformation, and thereby presses the photovoltaic module 1, so that the purpose of fixing the photovoltaic module 1 is achieved.

By providing the pressing piece 6 in the gap between the photovoltaic module 1 and the sidewall of the recess 11, it is able fill the space in the gap and avoid accumulation of dirt in this gap. And, the pressing piece 6 are connected with both the module bracket 2 and the photovoltaic module 1, which can enhance the connection strength thereof, protect the connection between the photovoltaic module 1 and the module bracket 2 and avoid the occurrence of edge warping between the photovoltaic module 1 and the module bracket 2.

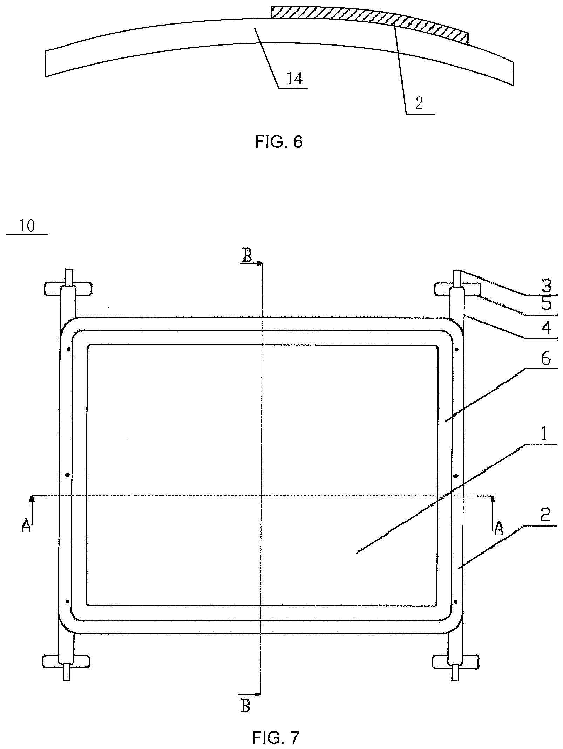

In some embodiments, as shown in FIG. 5 or FIG. 6, the foregoing module bracket 2 fits the vehicle roof 14, that is, the shape of the outer surface of the vehicle roof 14 is the same as the shape of the surface of the module bracket 2 close to the vehicle roof 14, thus, the surface of the module bracket 2 close to the vehicle roof 14 is able to be completely or as completely as possible in contact with the outer surface of the vehicle roof 14. As a result, the stability of the module bracket 2 being on the vehicle roof 14 can be improved.

In some embodiments of the present disclosure, as shown in FIG. 5, in cases that the outer surface of the vehicle roof 14 is flat, in order to make the module bracket 2 fit the vehicle roof 14, the surface of the module bracket 2 close to the vehicle roof 14 is a flat surface.

Or, in some other embodiments of the present disclosure, as shown in FIG. 6, in cases that the outer surface of the vehicle roof 14 is a curved surface, in order to make the module bracket 2 fit the vehicle roof 14, the surface of the module bracket 2 close to the vehicle roof 14 is a curved surface, and the above two curved surfaces have the same curvature.

On the basis of this, as shown in FIG. 1, the module bracket 2 is provided with at least two fixing units 13, and each fixing unit 13 detachably fits an upper edge of a vehicle door frame.

From the above, it can be seen that the fixing unit 13 and the upper edge of the vehicle door frame detachably fit, that is, the fixing unit 13 is detachably connected with the upper edge of the door frame. By connecting the fixing unit 13 to the upper edge of the vehicle door frame, the module bracket 2 carrying the photovoltaic module 1 is able to be mounted on the vehicle roof. As a result, it is able to mount the solar support 10 on the vehicle roof. When a user changes a vehicle, it is only necessary to disassemble the fixing unit 13 of the solar support 10 which is mounted on the vehicle roof from the upper edge of the vehicle door frame.

A specific structure of the foregoing fixing unit 13 will be described in detail below by examples.

In some embodiments, as shown in FIG. 7, the foregoing fixing unit 13 comprises a fixing supporting bar 4 and a fixing hook 3. One fixing hook 3 is connected to each of two ends of the fixing supporting bar 4.

In addition, the foregoing module bracket 2 is detachably connected with the fixing supporting bar 4. The following describes a detachable connection way of the module bracket 2 and the fixing supporting bar 4 by way of example.

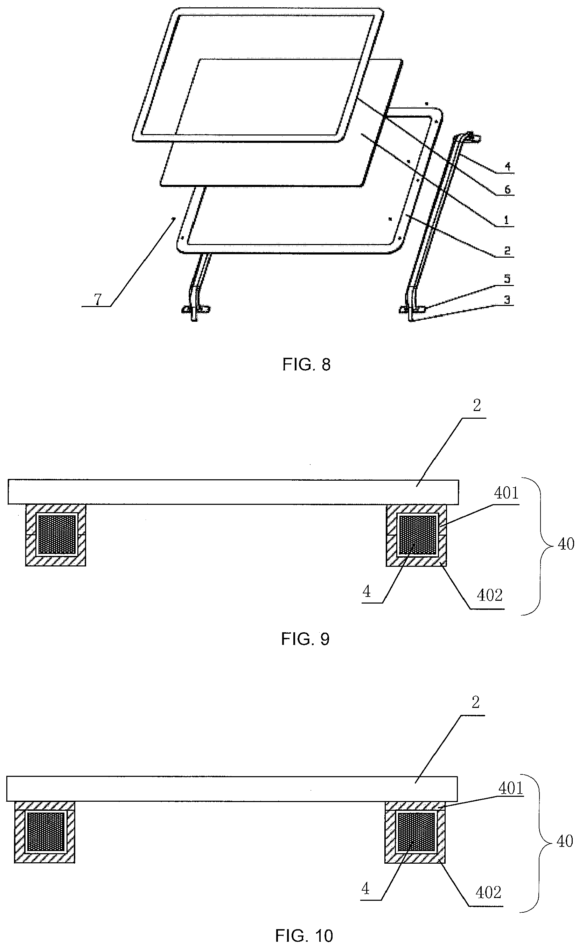

In some embodiments of the present disclosure, the module bracket 2 and the fixing supporting bar 4 are threaded connected. As shown in FIG. 8, the module bracket 2 is connected with two fixing supporting bars 4 by means of a bolt 7. Each of the two ends of the fixing supporting bar 4 are connected with a fixing hook 3 via a plurality of elastic plates.

Or, in some other embodiments of the present disclosure, the module bracket 2 and the fixing supporting bar 4 are connected as shown in FIG. 9, and the module bracket 2 and the fixing supporting bar 4 are connected via a clamping mechanism 40.

The clamping mechanism 40 comprises an upper clamping block 401 and a lower clamping block 402. In some embodiments, the upper clamping block 401 is mounted onto the module bracket 2 via a threaded connection mode. Or, in some embodiments, the foregoing upper clamping block 401 is mounted, by a rotational connection mode, onto the module bracket 2.

In some embodiments, the lower clamping block 402 is mounted on the upper clamping block 401 via the threaded connection mode. For example, in one of the clamping blocks, such as the upper clamping block 401, a threaded hole is machined thereon; in another one of the clamping blocks, such as the lower clamping block 402, an unthreaded hole is machined thereon. A bolt passes through the unthreaded hole and matches the threaded hole. The two clamping blocks are clamped by tightening the bolt. The foregoing bolt is able to provide clamping force to the two clamping blocks to clamp the fixing supporting bar 4.

A groove fitting the fixing supporting bar 4 is provided on the upper clamping block 401 and/or the lower clamping block 402, and the fixing supporting bar 4 is located in the groove.

For example, as shown in FIG. 9, a groove is machined on each of the two clamping blocks (i.e., the upper clamping block 401 and the lower clamping block 402). These two grooves of the two clamping blocks are aligned, forming the groove fitting the cross-sectional shape of the fixing supporting bar 4.

Or, exemplarily, as shown in FIG. 10, one of the clamping blocks, such as the upper clamping block 401, is in a planar block structure; and on another one of the clamping blocks, such as the lower clamping block 402, the groove fitting the shape of the fixing supporting bar 4 is machined.

It should be noted that any clamping block, provided with a groove, of the upper clamping block 401 and the lower clamping block 402 is able to be made of an elastic material. This clamping block is able to clamp the fixing supporting bar 4 by its own elasticity.

In these embodiments, the clamping blocks are used to connect the fixing supporting bar 4 and the module bracket 2, which is also easily disassembled, and it is easy to apply this solar support to different models of vehicles.

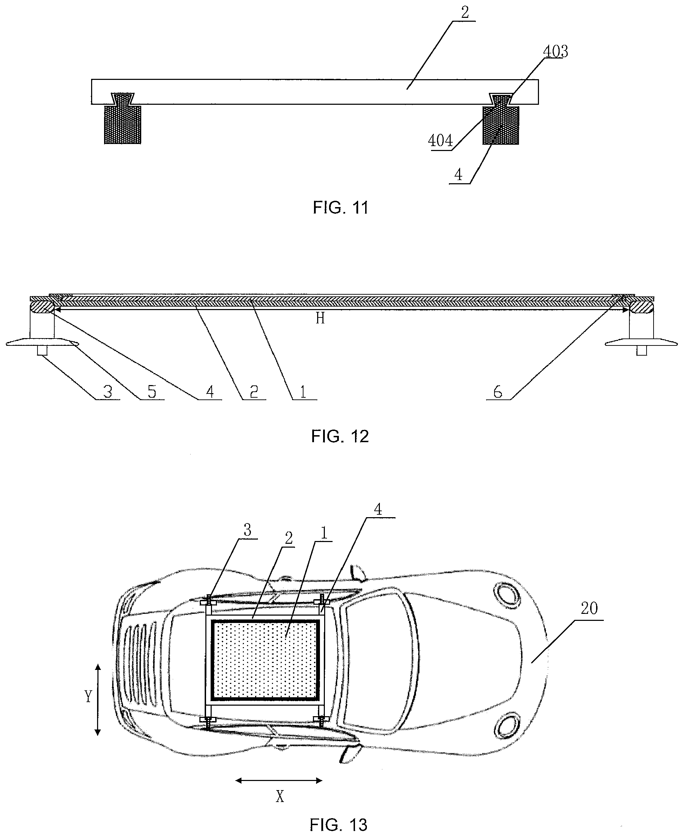

Or, in some other embodiments of the present disclosure, the module bracket 2 and the fixing supporting bar 4 are connected as shown in FIG. 11, and the module bracket 2 and the fixing supporting bar 4 are connected via a dovetail groove 403 and a dovetail tenon 404.

In FIG. 11, the module bracket 2 is provided with the dovetail groove 403, and the fixing supporting bar 4 is provided with the dovetail tenon 404 fitting the dovetail groove 403.

Or, the dovetail tenon 404 is provided on the module bracket 2, and the dovetail groove 403 fitting the dovetail tenon 404 is provided on the fixing supporting bar 4.

The connection mode of the dovetail groove 403 and the dovetail tenon 404 is an easy and fast installation which is solid and reliable. In some embodiments, the axis direction of the dovetail groove 403 is along the front-rear direction of the vehicle 20. After the dovetail tenon 404 is mounted into the dovetail groove 403, they are able to be fixing with by friction therebetween.

In some embodiments, the dovetail groove 403 and the dovetail tenon 404 are fixed via a jacking mechanism. For example, the jacking mechanism is a jacking bolt. However, the positioning mode is not limited to the jacking mechanism, and the selection of the jacking mechanism is not limited to the jacking bolt.

In these embodiments, upon connecting the fixing supporting bar 4 and the module bracket 2 by the connection mode of the dovetail groove 403 and the dovetail tenon 404, the dovetail tenon 404 is slid from one end of the dovetail groove 403 into the dovetail groove 403, and the dovetail groove 403 and the dovetail tenon 404 are fixed via their own friction therebetween or via the jacking mechanism. In this way, the fixing supporting bar 4 and the module bracket 2 are not only able to be quickly disassembled, but are also able to flexibly adjust the spacing H (as shown in FIG. 12) between two fixing supporting bars 4, which are respectively located on two sides of the module bracket 2, of the solar support 10 mounted on the vehicle roof, by relative sliding between the dovetail tenon 404 and dovetail groove 403.

In some embodiments of the present disclosure, the module bracket 2 is detachably connected with the fixing supporting bar 4. In this situation, when a user changes a vehicle in a different model, the user is able to remove the fixing supporting bar 4 whose size is not suitable for the vehicle in the replaced model and replace it with a fixing supporting bar 4 that is suitable for the current vehicle.

In addition, the inner side of the foregoing fixing hook 3 fits the upper edge of the vehicle door frame, and the outer side of the fixing hook 3 fits the upper edge of the inner side of a vehicle door corresponding to the vehicle door frame.

It should be noted that the inner side of the fixing hook 3 fitting the upper edge of the vehicle door frame means that the shape of the inner side of the fixing hook 3 is the same as the shape of the outer surface of the upper edge of the door frame that is in contact with the inside surface of the fixing hook 3, so that the two surfaces fit completely or as completely as possible.

In addition, the outer side of the fixing hook 3 fitting the upper edge of the inner side of the vehicle door means that the shape of the outer surface of the fixing hook 3 is the same as the shape of the inner surface of the vehicle door that is in contact with the outer surface of the fixing hook 3, so that the two surfaces fit completely or as completely as possible fit. In this way, the vehicle door is easy to close. And installing the hook does not affect opening or closing the door.

In some embodiments of the present disclosure, in order to avoid the module bracket 2 damaging paint of the vehicle roof during driving, as shown in FIG. 12, a plurality of supporting pads 5 are arranged on a side of the module bracket 2, which is away from the photovoltaic module 1, and a material constituting the supporting pads 5 is an elastic material. For example, the elastic material is rubber. In some of the embodiments where the module bracket 2 comprises the fixing supporting bar 4, at least two rubber pads 5 are mounted on the lower surface of the fixing supporting bar 4. When fixing the fixing supporting bar 4 to the vehicle roof, each rubber pad 5 is in contact with the surface of the vehicle roof, and a space is provided between the lower surface of the fixing supporting 4 and the vehicle roof. As a result, it can prevent the fixing supporting bar 4 from directly contacting the vehicle roof.

When it is necessary to use the foregoing solar support 10, as shown in FIG. 13, the solar support 10 is placed in an appropriate position on the vehicle roof of the vehicle 20 (a position where each fixing hook 3 is able to hook the upper edge of the door frame).

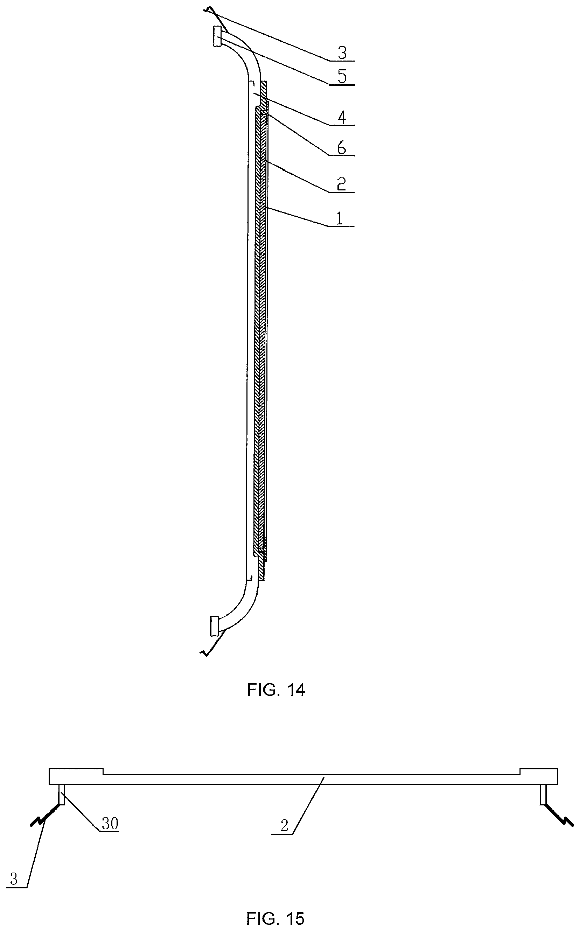

In this situation, the foregoing fixing supporting bar 4 is placed in the left-right direction of the vehicle 20 (Y direction in FIG. 13). The fixing hook 3 as shown in FIG. 14 is hooked to the upper edge of the door frame, it is possible to mount the solar support 10 onto the vehicle roof. When it does not need to use the solar support 10, the fixing hook 3 is removed from the upper edge of the door frame, and the module bracket 2 is removed from the vehicle roof.

From the above, it can be seen that there is no need to mount the solar support 10 provided by some embodiments of the present disclosure on a vehicle, before the vehicle leaves the factory. And a user can mount the solar support onto the vehicle roof himself by choosing the fixing supporting bar 4 in an appropriate specification. Therefore, the solar support 10 mounted on the vehicle roof in these embodiments is in a simple structure, is easy to be disassembled and mounted, has a wide applied range, and can be disassembled and mounted according to the user's own wish.

The connection mode between the fixing hook 3 and the module bracket 2 will be described in detail below.

From the above, it can be seen that it is possible to apply the solar support 10 provided by the present disclosure to vehicles in different models. Due to the different positions of the vehicle door frames of vehicles in different models, it needs to adjust the position of the fixing hook 3 in the solar support 10 mounted on the vehicle roof.

In this situation, in some embodiments of the present disclosure, the foregoing fixing hook 3 and the module bracket 2 is able to be connected via a retractable unit 30 therebetween as shown in FIG. 15. During the extension and contraction of the foregoing retractable unit 30, the distance between the fixing hook 3 and the module bracket 2 is changed.

The structure of the foregoing retractable unit 30 will be described below.

In some embodiments of the present disclosure, as shown in FIG. 15, the retractable unit 30 comprises an elastic connector, one end of the elastic connector is connected with the module bracket 2, and another end thereof is connected with the fixing hook 3.

In some embodiments, the elastic connector is an elastic plate with elasticity. Upon stretching the fixing hook 3, the foregoing elastic plate undergoes elastic deformation. As a result, the position of the fixing hook 3 is adjusted.

Or, in some embodiments, the elastic connector comprises a plurality of springs (a spring is shown in FIG. 15) connected to the underside of the module bracket 2. Upon mounting the solar support 10 onto the vehicle roof, each spring is in contact with the vehicle roof and a certain space is provided between the lower surface of the module bracket 2 and the vehicle roof.

A plurality of the fixing hooks 3 are connected to each of the left and right sides of the module bracket 2 via the springs (i.e., the retractable unit 30). When it needs to use the solar support 10, the module bracket 2 is positioned on the vehicle roof, the springs are stretched, and the fixing hook 3 is connected with the upper edge of the door frame, completing the installation of the solar vehicle support 10. In this way, it is able to adjust the position where the fixing hook 3 is able to be fixed by stretching the springs. Therefore, the solar support 10 in these embodiment is also able to be applied to the vehicles in different models.

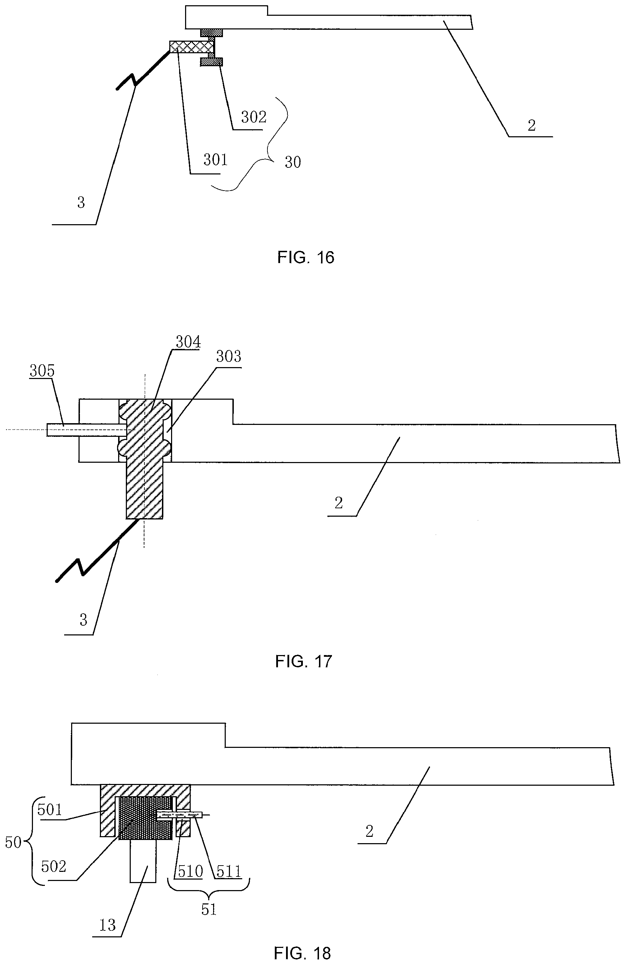

Or, in some other embodiments of the present disclosure, as shown in FIG. 16, the foregoing retractable unit 30 comprises a pulling belt 301 and a reel 302.

The reel 302 is rotatably connected with the module bracket 2, one end of the pulling belt 301 is fixedly connected with the reel 302, and another end of the pulling belt 301 is connected with the fixing hook 3.

On the basis of this, the foregoing solar support 10 further comprises a locking mechanism. The reel 302 cooperates with the locking mechanism.

Upon using the pulling belt 301 and the reel 302 as the retractable unit 30 for adjusting the fixing hook 3, it is easy in installation and adjustment. In some embodiments, the reel 302 is prevented from automatically releasing and rotating via the locking mechanism (for example, a ratchet). Or, in some embodiments, connecting the reel 302 to another locking mechanism (for example, a positioning pin) prevents the reel 302 from automatically releasing and rotating.

In some embodiments, the reel 302 is prevented from automatically releasing and rotating by the friction between the reel 302 and the module bracket 2.

Upon using the reel 302 and the pulling belt 301 as the retractable unit 30, it is able to achieve the purpose of manually adjusting the size of the fixing force of the fixing hook 3. Also, the solar support can be conveniently and quickly disassembled and mounted.

Or, in some other embodiments of the present application, as shown in FIG. 17, the retractable unit 30 comprises a retractable hole 303 provided on the module bracket 2 and a retractable bar 304 matched the retractable hole 303, and the retractable bar 304 is provided with a plurality of protrusions.

The foregoing solar support 10 further comprises a jacking mechanism 305 disposed on a sidewall of the retractable hole 303 and configured to press the retractable bar 304 against the sidewall of the retractable hole 303.

In some embodiments, the foregoing jacking mechanism 305 adopts the following structure: a threaded hole is machined on the sidewall of the retractable hole 303, and a bolt or a screw is adapted in the threaded hole. Upon tightening the bolt or the screw inward, it is able to jack the retractable bar 304 tightly, and the position of the retractable bar is fixed by the friction between the protrusions on the surface of the retractable bar 304 and the inner wall of the retractable hole 303.

Or, in some embodiments, an unthreaded hole is made on the sidewall of the retractable hole 303, an unthreaded bar is adapted in the unthreaded hole, ratchet teeth are machined along the axial direction of the unthreaded bar, and a reed is provided on the inner wall of the unthreaded hole. Upon pressing the unthreaded bar inwards, the reed automatically catches the ratchet teeth, thus pressing the retractable bar 304 tightly. In some embodiments, the reed can release the ratchet teeth by toggling a paddle and make the unthreaded bar smoothly back.

In these embodiments, the module bracket 2 is fixed by using the jacking mechanism to jack the retractable bar 304 tightly. During installation, the fixing hook 3 is adjusted to a suitable position, the jacking mechanism 305 is used to jack the retractable bar 304, and the friction between the retractable bar 304 and the wall of the retractable hole 303 prevents the retractable bar 304 from loosening. The mounting structure of these embodiments can also achieve the purpose of quick disassembly and assembly.

The foregoing embodiments describe the structure of the retractable unit 30 that connects the fixing hook 3 and the module bracket 2. In these embodiments, in some situations, the fixing unit 13 comprises the fixing supporting bar 4 and the fixing hook 3; and in some other situations, the fixing unit 13 comprises the fixing hook 3 and does not comprise the fixing supporting bar 4.

In addition, for the fixing unit 13 in any structure mentioned above, in order to facilitate adjusting the mounting position of the fixing unit 13 to apply the solar support to vehicles in different lengths, as shown in FIG. 18, in some embodiments, the fixing unit 13 and the module bracket 2 are connected via a sliding mechanism 50 therebetween, and this fixing unit 13 is able to slide in the front-rear direction of the module bracket 2 (X direction in FIG. 13).

The sliding mechanism 50 comprises a slide rail 501 and a slider 502 matching the slide rail 501. In some embodiments, the slide rail 501 is a raised rail. In some embodiments, an unthreaded bar is used as the slide rail 501. The slider 502 is in sliding engagement with the corresponding slide rail 501.

In some embodiments, as shown in FIG. 18, the slide rail 501 is mounted on the module bracket 2, and the slider 502 is mounted on the fixing unit 13. Based on this, after the fixing unit 13 is slid with respect to the module bracket 2 to a target position, it is further necessary to define the position of the fixing unit 13. In some embodiments, the friction between the fixing unit 13 and the module bracket 2 is used for positioning.

Or, in the situation that the solar support 10 comprises a positioning mechanism 51, in some embodiments, the positioning mechanism 51 is used to position the fixing unit 13.

The structure of the positioning mechanism 51 will be described below.

In some embodiments of the present disclosure, the positioning mechanism 51 comprises positioning pin holes 510 provided on the slide rail 501 and positioning pin holes 510 provided on the slider 502. In addition, the positioning mechanism 51 further comprises a positioning pin 511 fitting the positioning pin holes 510.

Upon using the positioning pin 511 for positioning, the positioning structure thereof is solid and reliable, and the adjustment process thereof is simple and convenient.

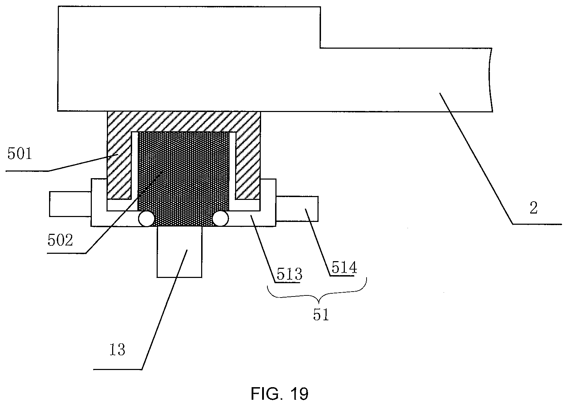

Or, in some other embodiments of the present application, as shown in FIG. 19, the positioning mechanism 51 comprises two clamping blocks 513 for clamping the slide rail 501 and a pressing mechanism (or jacking mechanism) 514 configured to tightly press the two clamping blocks 513.

At least one of the two clamping blocks 513 is hinged with the slider 502.

In this way, upon requiring to move the fixing unit 13 along the slide rail 501 via the slider 502, a clamping block 513 is able to be flipped to the side away from the slide rail 501. As a result, the clamping block 513 comes into contact with the slide rail 501. And upon requiring to position the fixing unit 13, a clamping block 513 is flipped to the side close to the slide rail 501 and is in contact with the slide rail 501, thus achieving the clamping of the slide rail 501.

In some embodiments, the clamping blocks 513 are clamped by mounting an elastic piece between the two clamping blocks. Or, in some embodiments, an unthreaded hole is machined on one of the clamping blocks, and a threading hole is machined in another clamping block, and they are clamped in a threaded tightening method.

The above are only some embodiments of the present disclosure. However, the protection scope of the present disclosure is not limited thereto. Any changes or substitutions that can be easily conceived by a person skilled in the art within the technical scope disclosed in the present disclosure shall fall within the protection scope of the present disclosure. Therefore, the protection scope of the present disclosure should be subject to the protection scope defined by the claims.

## Claims

1. A solar support (10) mounted on a vehicle roof, **characterized by** comprising a module bracket (2) and a photovoltaic module (1) disposed on the module bracket (2), wherein
the module bracket (2) fits the vehicle roof, the module bracket (2) is provided with at least two fixing units (13), and each of the at least two fixing units (13) detachably fits an upper edge of a vehicle door frame.

2. The solar support (10) according to claim 1, **characterized in that**: the module bracket (2) is in a plate-shape, the module bracket (2) is provided with a recess (11), the photovoltaic module (1) is laid in the recess (11), wherein,
the area of a bottom surface of the recess (11) is equal to the area of the photovoltaic module (1); or
there is a gap between a sidewall of the recess (11) and the photovoltaic module (1).

3. The solar support (10) according to claim 2, in cases that there is the gap between the sidewall of the recess (11) and the photovoltaic module (1), **characterized in that**:
between the photovoltaic module (1) and the sidewall of the recess (11), a pressing piece (6) surrounding the photovoltaic module (1) is disposed, wherein
the pressing piece (6) has a T-shaped cross-section; a vertical portion of the pressing piece (6) is disposed between the photovoltaic module (1) and the sidewall of the recess (11); a part of a surface, close to a bottom surface of the recess (11), of a parallel portion of the pressing piece (6) is in contact with the photovoltaic module (1); and another part of the surface, close to the bottom surface of the recess (11), of the parallel portion of the pressing piece (6) is in contact with the module bracket (2).

4. The solar support (10) according to claim 3, **characterized in that**: the gap between the sidewall of the recess (11) and the photovoltaic module (1) is filled with the vertical portion of the pressing piece (6) after the vertical portion of the pressing piece (6) being pre-pressed.

5. The solar support (10) according to any of claims 1-4, **characterized in that** one of the at least two fixing units (13) is a fixing hook (3).

6. The solar support (10) according to claim 5, **characterized in that**: an inner side of the fixing hook (3) fits the upper edge of the vehicle door frame, and an outer side of the fixing hook (3) fits an upper edge of an inner side of a vehicle door corresponding to the vehicle door frame.

7. The solar support (10) according to claim 5, **characterized in that** the fixing hook (3) and the module bracket (2) are connected via a retractable unit (30) therebetween.

8. The solar support (10) according to claim 7, **characterized in that**:
the retractable unit (30) comprises a pulling belt (301) and a reel (302), wherein the reel (302) is rotatably connected with the module bracket (2), one end of the pulling belt (301) is fixedly connected with the reel (302), and another end of the pulling belt (301) is connected with the fixing hook (3); and
the solar support (10) further comprises a locking mechanism, and the reel (302) cooperates with the locking mechanism.

9. The solar support (10) according to claim 7, **characterized in that**: the retractable unit (30) comprises an elastic connector, an end of the elastic connector is connected with the module bracket (2), and another end of the elastic connector is connected with the fixing hook (3).

10. The solar support (10) according to claim 7, **characterized in that**:
the retractable unit (30) comprises a retractable hole (303) disposed on the module bracket (2) and a retractable bar (304) fitting the retractable hole (303), and a plurality of protrusions are arranged on the retractable bar (304); and
the solar support (10) further comprises a jacking mechanism (305), disposed on a sidewall of the retractable hole (303) and configured to press the retractable bar (304) against the sidewall of the retractable hole (303).

11. The solar support (10) according to claim 5, **characterized in that**:
one of the at least two fixing units (13) further comprises a fixing supporting bar (4), and each of two ends of the fixing supporting bar (4) is connected with the fixing hook (3); and
the module bracket (2) is detachably connected with the fixing supporting bar (4).

12. The solar support (10) according to claim 11, **characterized in that**:
the module bracket (2) and the fixing supporting bar (4) are connected via a clamping mechanism (40), wherein,
the clamping mechanism (40) comprises an upper clamping block (401) and a lower clamping block (402), the upper clamping block (401) is mounted on the module bracket (2), the lower clamping block (402) is mounted on the upper clamping block (401),
a groove fitting the fixing supporting bar (4) is provided on the upper clamping block (401) and/or the lower clamping block (402), and the fixing supporting bar (4) is located in the groove;
or,
the module bracket (2) and the fixing supporting bar (4) are connected via a dovetail groove (403) and a dovetail tenon (404), wherein,
the dovetail groove (403) is provided on the module bracket (2) and the dovetail tenon (404) fitting the dovetail groove (403) is provided on the fixing supporting bar (4), or the dovetail tenon (404) is provided on the module bracket (2) and the dovetail groove (403) fitting the dovetail tenon (404) is provided on the fixing supporting bar (4).

13. The solar support (10) according to any of claims 1-3, **characterized in that**:
one of the at least two fixing units (13) and the module bracket (2) are connected via a sliding mechanism (50) therebetween, and the one of the at least two fixing units (13) is able to slide in a front-rear direction of the module bracket (2); and
the sliding mechanism (50) comprises a slide rail (501) and a slider (502) matching the slide rail (501).

14. The solar support (10) according to claim 13, **characterized by** further comprising a positioning mechanism (51) disposed between the one of the at least one fixing units (13) and the module bracket (2), wherein
the positioning mechanism (51) comprises positioning pin holes (510) arranged on the slide rail (501), positioning pin holes (510) arranged on the slider (502), and the positioning mechanism (51) further comprises a positioning pin (511) fitting the positioning pin holes (510);
or,
the positioning mechanism (51) comprises two clamping blocks (513) configured to clamp the slide rail (501) and a pressing mechanism(514) configured to press the two clamping blocks (513), and at least one of the two clamping blocks (513) is hinged with the slider (502).

15. The solar support (10) according to claim 1, **characterized in that**: a plurality of supporting pads (5) are arranged on a side of the module bracket (2), which is away from the photovoltaic module (1), and a material constituting the supporting pads (5) is an elastic material.
